# EUROPÄISCHE PATENTANMELDUNG

(11) **EP 4 575 485 A1**
(43) Veröffentlichungstag der Anmeldung: **25.06.2025**
(21) Anmeldenummer: 24218702.9
(22) Anmeldetag: 10.12.2024
(51) Int. Cl.: G01N 27/404

(54) **VERFAHREN ZUR HERSTELLUNG EINES ELEKTROCHEMISCHEN GASSENSORS UND ELEKTROCHEMISCHER GASSENSOR**

(30) Priorität: 18.12.2023 DE 102023135483
(71) Anmelder: Dräger Safety AG & Co. KGaA, 23560 Lübeck (DE)
(72) Erfinder: Sick, Michael, 23558 Lübeck (DE); Gliech, Manuel, 23558 Lübeck (DE); Eckhardt, Rolf, 23558 Lübeck (DE); Rittemann, Steffen, 23558 Lübeck (DE)

(57) **Zusammenfassung**

Die vorliegende Erfindung betrifft ein Verfahren zur Herstellung eines elektrochemischen Gassensors und einen durch dieses Verfahren erhältlichen elektrochemischen Gassensor. Das Verfahren weist die Schritte auf: Bereitstellen eines Substrats, wobei das Substrat eine Anzahl von in Normalenrichtung des Substrats gebildeten Durchgangsöffnungen aufweist, Aufbringen von Elektrodenmaterial auf eine Oberseite des Substrats und/oder auf eine Unterseite des Substrats, Verbinden von Elektrodenmaterial und Substrat, sodass die Anzahl von Durchgangsöffnungen durch das Elektrodenmaterial verschlossen wird, um eine Anzahl von auf der, der Oberseite gegenüberliegenden, Unterseite des Substrats elektrisch kontaktierbaren Kontaktflächen zu erhalten.

## Beschreibung

Die vorliegende Erfindung betrifft ein Verfahren zur Herstellung eines elektrochemischen Gassensors und einen durch dieses Verfahren erhältlichen elektrochemischen Gassensor.

Elektrochemische Sensoren zur Messung von Gasen, auch bezeichnet als elektrochemische Gassensoren, sind bekannt. Bei diesen werden üblicherweise zwei oder mehr elektrische Halbzellen, umfassend Elektroden und Elektrolyten, kombiniert und von der diese umgebenden Umgebung getrennt durch ein Gehäuse aufgenommen. Elektrolyte, wie zum Beispiel Schwefelsäure in wässriger Lösung, sind im Allgemeinen kriechfähige Flüssigkeiten, die durch kleinste Öffnungen im Gehäuse austreten und in die Umgebung gelangen können. Das Gehäuse muss daher durch eine geeignete Abdichtung insbesondere sicherstellen, dass der Elektrolyt nicht entweichen kann.

Herausforderungen bei der Abdichtung des Gehäuses gegenüber der Umgebung sind insbesondere Stellen, an denen Ableitungsdrähte durch das Gehäuse nach außen geführt werden. Ableitungsdrähte dienen im Allgemeinen dazu, Messsignale der Elektroden bereitzustellen.

Ein Gassensor mit einem Stromkreis, welcher einen außerhalb des Gehäuses angeordneten Potentiostaten elektrisch mit den Elektroden des Gassensors verbindet, ist aus DE 10 2014 009 365 A1 bekannt.

Der vorliegenden Erfindung liegt die Aufgabe zugrunde, ein Verfahren zur Herstellung eines elektrochemischen Gassensors sowie einen durch das Verfahren erhältlichen elektrochemischen Gassensor bereitzustellen, bei dem eine Signalableitung verbessert ist.

Diese und weitere Aufgaben werden gelöst durch ein Verfahren zur Herstellung eines elektrochemischen Gassensors gemäß Anspruch 1 sowie durch einen entsprechenden elektrochemischen Gassensor nach Anspruch 9.

Erfindungsgemäß wird insofern ein Verfahren zur Herstellung eines elektrochemischen Gassensors bereitgestellt. Das Verfahren weist die Schritte auf: Bereitstellen eines Substrats, wobei das Substrat eine Anzahl von in Normalenrichtung des Substrats gebildeten Durchgangsöffnungen aufweist, Aufbringen von Elektrodenmaterial auf eine Oberseite des Substrats und/oder auf eine Unterseite des Substrats, und Verbinden von Elektrodenmaterial und Substrat, sodass die Anzahl von Durchgangsöffnungen durch das Elektrodenmaterial verschlossen wird, um eine Anzahl von auf der, der Oberseite gegenüberliegenden, Unterseite des Substrats elektrisch kontaktierbaren Kontaktflächen zu erhalten.

Auf diese Weise kann eine Anzahl elektrisch kontaktierbarer Kontaktflächen erhalten werden, welche eine elektrische Kontaktierung des Gehäuseinnenraums erlauben, ohne dass Ableitungsdrähte in das Gehäuse geführt werden müssen.

Durch das Verbinden von Elektrodenmaterial und Substrat wird eine integrale Verbindung erzielt, sodass ein Substrat mit darauf oder daran gebildetem Elektrodenmaterial erhalten wird. Es ist auf diese Weise außerdem möglich, durch das Verbinden von Elektrodenmaterial und Substrat eine flüssigkeitsdichte Grenzfläche zwischen Elektrodenmaterial und Substrat und somit eine Anzahl von abgedichteten elektrisch kontaktierbare Kontaktflächen zu erhalten. Ein Kriechen von Elektrolyt in Richtung der Anzahl von elektrisch kontaktierbaren Kontaktflächen kann somit verhindert oder zumindest verringert werden.

Unter einem elektrochemischen Gassensor wird eine elektrochemische Zelle verstanden, die eingerichtet ist, wenigstens eine gasförmige Substanz (insbesondere ein Zielgas) in einem Gas oder in einem Gasgemisch (insbesondere in einem Probegas) nachzuweisen.

Im Folgenden werden die Begrifflichkeiten "elektrochemischer Gassensor" und "Gassensor" austauschbar verwendet.

Unter einem Substrat wird ein Trägermaterial für Elektrodenmaterial verstanden.

Bei dem Substrat kann es sich beispielsweise um ein poröses Material handeln. Beispielsweise kann das Substrat als ein Vlies aus Glasfasern und/oder Glaspartikeln ausgestaltet sein. In einem weiteren Beispiel kann das Substrat als ein poröser Pressling aus Materialien wie Keramik, Fasern, Geweben, Kunststoffen, Glaspulver und/oder deren Mischungen ausgestaltet sein. Besonders bevorzugt wird ein poröser Pressling durch Verpressen von Silika und/oder Glasstaub mit Polytetrafluorethylen-Pulver und/oder Polypropylen-Pulver erhalten, d.h. bereitgestellt.

Die erfindungsgemäßen Schritte "Bereitstellen des Substrats [...]", "Aufbringen von Elektrodenmaterial [...]" und "Verbinden von Elektrodenmaterial [...]" können zeitlich versetzt oder im Wesentlichen gleichzeitig durchgeführt werden.

Wenn das Substrat als Pressling ausgestaltet ist, ist es bevorzugt, dass das Elektrodenmaterial vor einem Pressen des Presslings auf Material, das zur Bildung des Substrats durch Pressen geeignet ist, aufgebracht und während des Pressens mit diesem verbunden (d.h. eingepresst) wird. In dieser bevorzugten Ausgestaltung werden die Schritte "Bereitstellen eines Substrats [...]", "Aufbringen von Elektrodenmaterial [...]" und "Verbinden von Elektrodenmaterial [...]" im Wesentlichen gleichzeitig durchgeführt.

Das Substrat kann als im Wesentlichen zylindrische Scheibe ausgestaltet sein.

Das Substrat kann zur Verbesserung der Oberflächenbenetzbarkeit behandelt werden.

Das Substrat kann beispielsweise als eine Membran ausgestaltet sein, welche dazu geeignet sein kann, einen Elektrolyten, wie beispielsweise einen wässrigen Elektrolyten, aufzunehmen. Bevorzugt ist das Substrat hierzu hydrophil ausgestaltet.

Unter einer Normalenrichtung des Substrates wird eine Richtung verstanden, welche senkrecht auf einer Grundebene des Substrats steht, d. h. eine Richtung, welche einen Normalenvektor der Grundebene des Substrats entspricht.

Eine Querschnittsform der Anzahl von Durchgangsöffnungen kann im Wesentlichen beliebig sein. In einem einfachen Beispiel kann eine Durchgangsöffnung einen kreisförmigen Querschnitt aufweisen und sich beispielsweise im wesentlichen zylinderförmigen durch das Substrat hindurch erstrecken. Die Querschnittsform der Anzahl von Durchgangsöffnungen kann jedoch auch komplex sein. So kann eine Anzahl von Durchgangsöffnungen beispielsweise durch ein Netzwerk von Poren in einem porösen Substrat gebildet sein.

Das Aufbringen von Elektrodenmaterial kann auf beliebige Weise erfolgen. Es ist jedoch bevorzugt, dass das Aufbringen des Elektrodenmaterials durch Drucken erfolgt, d.h. durch Aufbringen von Elektrodenmaterial in flüssiger oder pastöser Form. Hierzu kann das Elektrodenmaterial als Bestandteil einer zum Drucken geeigneten Zusammensetzung, insbesondere als Bestandteil einer Tinte vorliegen. Dabei kann ein im Wesentlichen beliebiges Druckverfahren Anwendung finden. Geeignete Verfahren sind insofern beispielsweise der Siebdruck, Inkjet-Druck oder Matrizendruck. Es ist bevorzugt, dass das Fließverhalten der Tinte, falls vorhanden, so an die Geometrie der Anzahl von Durchgangsöffnungen angepasst ist, dass die Tinte in die Anzahl von Durchgangsöffnungen eindringen kann. Besonders bevorzugt weist die Tinte ein thixotropes Fließverhalten auf.

Unter Elektrodenmaterial wird ein Material verstanden, welches geeignet ist, direkt oder durch weitere Schritte eine oder mehrere elektrisch leitfähige Elemente in bzw. auf dem Substrat auszubilden.

In einer bevorzugten Ausgestaltung der Erfindung wird durch das Aufbringen des Elektrodenmaterials und durch das Verbinden von Elektrodenmaterial und Substrat nicht nur das mittels der Kontaktflächen elektrisch kontaktierbare Elektrodenmaterial erhalten, sondern zugleich eine Elektrode des Gassensors ausgebildet, wie beispielsweise eine Referenzelektrode, Messelektrode oder Gegenelektrode. Dies ist jedoch nicht erforderlich. So kann durch das Verfahren auch lediglich das elektrisch kontaktierbare Elektrodenmaterial erhalten werden, welches mit einer separat bereitgestellten Elektrode des Gassensors unmittelbar oder mittelbar in Kontakt stehen kann.

Insbesondere für den Fall, dass durch das Aufbringen des Elektrodenmaterials eine Elektrode des Gassensors erhalten wird, ist bevorzugt, dass das Elektrodenmaterial ein Katalysatormaterial, einen Filmstoff, einen Haftstoff und/oder einen Kunststoff umfasst.

Bei der Anzahl von Durchgangsöffnungen kann es sich um genau eine Durchgangsöffnung oder um eine Mehrzahl von Durchgangsöffnung handeln.

Die Anzahl von Durchgangsöffnungen kann beispielsweise durch Perforieren in das Substrat eingebracht werden. Verfahren, welche sich zum Perforieren eignen, sind beispielsweise Stanzen oder Lasern.

Zumindest der Schritt Aufbringen von Elektrodenmaterial auf die Oberseite des Substrats und/oder auf die Unterseite des Substrats kann mehrfach durchgeführt werden. So können beispielsweise voneinander getrennte Segmente von Elektrodenmaterial auf bzw. in dem Substrat bereitgestellt werden, welche getrennt voneinander durch jeweilige elektrisch kontaktierbare Kontaktflächen kontaktierbar sein können.

Vorzugsweise umfasst das Verbinden von Elektrodenmaterial und Substrat eine thermische Behandlung von Substrat und Elektrodenmaterial.

Bei der thermischen Behandlung kann es sich beispielsweise um einen Sintervorgang handeln. Eine Temperatur der thermischen Behandlung sollte dabei an die Materialeigenschaften von Substrat und Elektrodenmaterial angepasst sein. Beispielsweise kann eine Temperatur der thermischen Behandlung in einem Bereich zwischen 110 °C bis 350 °C liegen.

Durch die thermische Behandlung kann die Verbindung von Elektrodenmaterial und Substrat erreicht oder verbessert werden.

Vorzugsweise ist das Substrat als eine gasdurchlässige und flüssigkeitsdichte Membran ausgestaltet. Dies ist insbesondere für Elektroden bevorzugt, die mit einer Atmosphäre (d.h. Probegas) in Kontakt stehen sollen, beispielsweise für eine Messelektrode oder Arbeitselektrode.

Auf diese Weise kann der Verbund aus Elektrodenmaterial und Substrat zur Begrenzung des Gassensors nach außen eingesetzt werden. So kann auf einer Seite des Verbunds der Elektrolyt angeordnet sein bzw. ein Volumen zur Aufnahme des Elektrolyten bereitgestellt sein und das flüssigkeitsdichte Substrat ein Durchtritt des Elektrolyten durch das Substrat verhindern. Indem das Substrat gleichzeitig gasdurchlässig ausgestaltet ist, kann diese Grenzfläche den Eintritt von Probegas zulassen. Durch Wahl der Gasdurchlässigkeit kann ein möglicher Gasvolumenstrom in den Gassensor angepasst werden.

Alternativ ist es bevorzugt, dass das Substrat als ein flüssigkeitsbenetzbar und vorzugsweise gasdichter Separator ausgestaltet ist.

In dieser Alternative kann der Verbund aus Elektrodenmaterial und Substrat innerhalb eines Volumens des Gassensors, welches zur Aufnahme des Elektrolyten geeignet ist, verwendet werden, um eine Elektrode zu bilden, welche durch das Substrat von einer weiteren Elektrode getrennt vorliegen kann. Dies ist besonders günstig, wenn der Gassensor in einem Stapelaufbau bereitgestellt werden soll.

Vorzugsweise umfasst das Substrat ein Glas oder einen Kunststoff.

Unter Glas wird ein Werkstoff umfassend oder bestehend aus Siliziumdioxid (SiO2) verstanden, d. h. ein anorganisch, nicht-metallisches Glas.

In einer Variante der Erfindung kann das Glas aus Siliziumdioxid bestehen und wird in diesem Falle auch als Quarzglas bezeichnet.

In einer weiteren Variante der Erfindung kann das Glas neben Siliziumdioxid weitere Bestandteile umfassen, insbesondere Oxide wie Aluminiumoxid, Alkalioxid, Phosphorpentoxid und/oder Bortrioxid. Das Glas kann ferner ergänzend oder alternativ Halogenid-Ionen aufweisen.

Unter einem Silikat wird ein Salz und/oder ein Ester einer Ortho-Kieselsäure (Si(OH)4) und deren Kondensate verstanden.

Vorzugsweise weist das Elektrodenmaterial das Glas und/oder ein Metall und/oder ein Metalloxid und/oder den Kunststoff und/oder Kohlenstoff auf.

Vorzugsweise ist das Metall und/oder das Metalloxid ausgewählt aus der Gruppe umfassend: Platin, Platinoxid, Gold, Goldoxid, Iridium, Iridiumoxid, Silber, Silberoxid, Ruthenium, Rutheniumoxid, Rhodium, Rhodiumoxid, Palladium, Palladiumoxid, Kupfer, Kupferoxid und Nickel.

Vorzugsweise ist der Kunststoff ausgewählt ist aus der Gruppe umfassend: Polytetrafluorethylen (PTFE), Polyethylen (PE), Polyethylenterephthalat (PET), Polypropylen (PP), Polyvinylchlorid (PVC), Polyetheretherketon (PEEK), Perfluoralkoxy-Polymer (PFA), Polyvinylidenfluorid (PVDF), Polyamid (PA), Polyurethan (PU), und Tetrafluorethylen-Hexafluorpropylen-Copolymer (FEP).

Die vorgenannten Materialien haben sich als besonders geeignet für die Bildung von Substraten und/oder Kontaktflächen und/oder Elektroden erwiesen. Vorzugsweise weist das Verfahren ferner den Schritt auf: Bereitstellen einer Elektrode auf dem Substrat, wobei die Elektrode durch das Aufbringen von dem Elektrodenmaterial auf die Oberseite des Substrats und/oder auf die Unterseite des Substrats erhalten wird, oder wobei die Elektrode durch ein zusätzliches Aufbringen von zusätzlichem Elektrodenmaterial auf das Elektrodenmaterial und/oder auf die Oberseite des Substrats und/oder auf die Unterseite des Substrats erhalten wird.

Auf diese Weise kann eine Elektrode entweder direkt durch das Aufbringen des Elektrodenmaterials erhalten werden und integral mit dem Substrat verbunden sein oder durch einen zusätzlichen Schritt erhalten werden.

Das zusätzliche Elektrodenmaterial kann in der Zusammensetzung von dem Elektrodenmaterial unterschiedlich sein oder gleichartig sein. Eine unterschiedliche Zusammensetzung ist insbesondere dann bevorzugt, wenn die Materialeigenschaften des Elektrodenmaterials und die Materialeigenschaften der Elektrode verschieden sein sollen.

Vorzugsweise weist das Verfahren ferner den Schritt auf: Hydrophilisieren einer Oberfläche der Elektrode.

Auf diese Weise kann die Benetzbarkeit der erhaltenen Elektrode mit wässrigem Elektrolyt verbessert werden.

Ein Beispiel der Hydrophilisierung ist es, das Elektrodenmaterial mit einer weniger hydrophoben Schicht zu beschichten.

Erfindungsgemäß wird ferner ein elektrochemischer Gassensor bereitgestellt, welcher durch ein vorbeschriebenes Verfahren erhältlich ist.

Vorzugsweise weist der Gassensor neben dem Substrat mit dem Elektrodenmaterial bzw. mit der Elektrode ferner auf: ein Sensorgehäuse, optional eine Diffusionsbarriere, welche einen Gasdurchtritt von einer Begebung zum Substrat behindert, optional ein Dichtelement, welches zwischen dem Substrat und dem Sensorgehäuse angeordnet ist und eine Anzahl elektrischer Ableitungen, welche in elektrischer Verbindung mit der Anzahl elektrisch kontaktierbarer Kontaktflächen stehen.

Diese und weitere Merkmale Vorteile und vorzugsweisen Ausgestaltungen der Erfindung ergeben sich ebenfalls aus der nachfolgenden Figurenbeschreibung. Dabei zeigt:
**Fig.** 1 ein Ausführungsbeispiel eines erfindungsgemäßen Gassensors,
**Fig.** 2 ein Ausführungsbeispiel eines weiteren erfindungsgemäßen Gassensors,
**Fig.** 3 ein Ausführungsbeispiel eines erfindungsgemäßen Substrats,
**Fig.** 4 ein Ausführungsbeispiel eines erfindungsgemäßen Verfahrens.

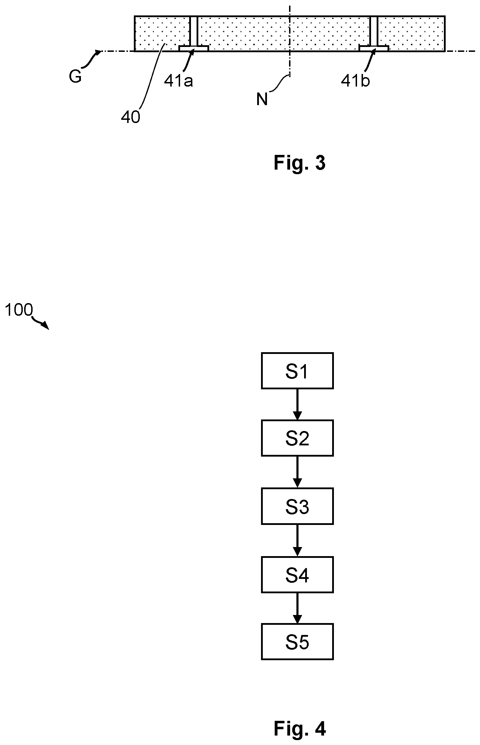

Erfindungsgemäß wird ein Verfahren 100 zur Herstellung eines elektrochemischen Gassensors 200 bereitgestellt. Ein Ausführungsbeispiel eines solchen Verfahrens 100 mit den Schritten S1, S2, ... ist in Fig. 4 dargestellt.

Schritt S1 ist das Bereitstellen eines Substrats 40, wobei das Substrat 40 eine Anzahl von Normalenrichtung in das Substrats 40 gebildeten Durchgangsöffnung 41a, 41b aufweist.

Ein Beispiel eines Substrats 40, welches eine Anzahl von in Normalenrichtung N des Substrats 40 gebildeten Durchgangsöffnung 41a, 41b aufweist, ist in Fig. 3 dargestellt. Das Substrat kann eine Grundfläche G aufweisen, zu welcher senkrecht sich die Normalenrichtung N erstreckt. Für den möglichen Fall, dass die Grundfläche G nicht eben ist, wird die Normalenrichtung N gebildet durch eine Senkrechte auf einer Tangentialebene an der Grundfläche G.

Im dargestellten Beispiel weist das Substrat 40 zwei Durchgangsöffnung 41a und 41b auf, welche einen in Normalenrichtung N betrachtet nicht-konstanten Querschnitt aufweisen. So ist ein in Betrachtungsebene oben liegender Teil der jeweiligen Durchgangsöffnung 41a, 41b im Wesentlichen zylindrisch ausgebildet, während ein in der Betrachtungsebene unten liegende Teil der jeweiligen Durchgangsöffnung 41a, 41b einen gegenüber dem oben liegenden Teil verbreitete Querschnittsfläche aufweist. Dies ist jedoch nicht erforderlich.

Das Substrat 40 aller Ausführungsformen kann beispielsweise als eine gasdurchlässige und flüssigkeitsdichte Membran ausgestaltet sein oder als ein flüssigkeitsbenetzbarer Separator ausgestaltet sein.

Das Substrat 40 kann beispielsweise ein Glas oder ein Kunststoff umfassen. Der Kunststoff kann ausgewählt sein aus der Gruppe umfassend: PTFE, PE, PET, PP, PVC, PEEK, PFA, PVDF, PA, PU und FEP.

Das Verfahren 100 nach Fig. 4 weist ferner Schritt S2 auf: Aufbringen von Elektrodenmaterial 50a, 50b, 50c auf eine Oberseite O des Substrats 40 und/oder auf eine Unterseite U des Substrats 40.

Das Verfahren 100 nach Fig. 4 weist ferner Schritt S3 auf: Verbinden von Elektrodenmaterial 50a, 50b, 50c und Substrat 40, sodass die Anzahl von Durchgangsöffnung in 41a, 41b durch das Elektrodenmaterial 50a, 50b, 50c verschlossen wird, um eine Anzahl von auf der, der Oberseite O gegenüberliegenden, Unterseite U des Substrats 40 elektrisch kontaktierbaren Kontaktflächen 51a, 51b zu erhalten.

Das Verfahren 100 kann ferner Schritt S4 aufweisen: Bereitstellen einer Elektrode 30 auf dem Substrat 40, wobei die Elektrode 30 durch das Aufbringen von dem Elektrodenmaterial 50a, 50b, 50c auf die Oberseite O des Substrats 40 und/oder auf die Unterseite U des Substrats 40 erhalten wird oder wobei die Elektrode 30 durch ein zusätzliches Aufbringen von zusätzlichem Elektrodenmaterial 52 auf das Elektrodenmaterial 50b und/oder auf die Oberseite O des Substrats 40 erhalten wird.

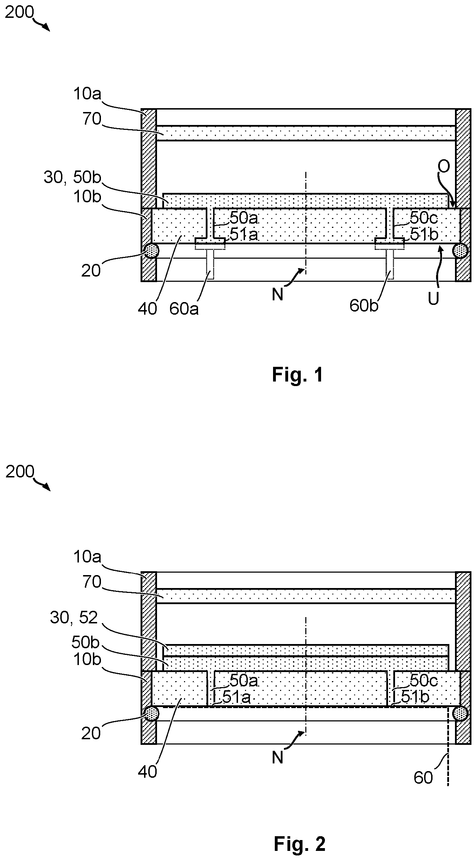

Ein Gassensor 200, welche durch das Verfahren 100 erhältlich ist, ist in Fig. 1 dargestellt.

Der Gassensor 200 weist insofern ein Substrat 40 auf, beispielsweise das Substrat 40 nach Fig. 3, in welchem die Anzahl von Durchgangsöffnungen 41a, 41b durch das auf die Oberseite O und/oder auf die Unterseite U des Substrats 40 aufgebrachte Elektrodenmaterial 50a, 50b, 50c verschlossen ist, um in diesem Beispiel auf der Unterseite U eine Anzahl von elektrisch kontaktierbaren Kontaktflächen 51a, 51b zu erhalten.

Im gezeigten beispielhaften Gassensor 200 nach Fig. 1 bildet das Elektrodenmaterial 50b, welches auf die Oberseite O aufgebracht worden ist, eine Schicht auf dem Substrat 40 aus. Dies ist jedoch nicht erforderlich, erforderlich ist lediglich, dass das Elektrodenmaterial 50a, 50c die Anzahl von Durchgangsöffnungen 41a, 41b verschließt und die vorbeschriebenen elektrisch kontaktierbaren Kontaktflächen 51a, 51b ausbildet.

Vorteilhaft und in Fig. 1 gezeigt ist es, wenn das Elektrodenmaterial 50b eine Elektrode 30 des Gassensors 200 ausbildet. Auf diese Weise kann besonders einfach ein elektrischer Kontakt zwischen dem Elektrodenmaterial 50a, 50c und der Elektrode 30 bereitgestellt werden.

Die elektrisch kontaktierbaren Kontaktflächen 51a, 51b können beispielsweise durch elektrische Ableitungen 60a, 60b elektrisch kontaktiert werden. Die genaue Ausgestaltung der elektrischen Ableitungen 60a, 60b kann im Wesentlichen beliebig sein. Beispielsweise kann es sich bei den elektrischen Ableitungen 60a, 60b um Metallelemente handeln.

Das Substrat 40 kann durch das Gehäuse des Gassensors 200 in den Gassensor 200 aufgenommen sein. Im gezeigten Beispiel nach Fig. 1 wird dies dadurch realisiert, dass das Gehäuse zweiteilig mit einem ersten Gehäuseteil 10a und einem zweiten Gehäuseteil 10b ausgestaltet ist. Das Substrat 40 kann dann zwischen dem ersten Gehäuseteil 10a und dem zweiten Gehäuseteil 10b aufgenommen sein. Es ist möglich und gezeigt, dass der Gassensor 200 ferner ein Dichtelement 20, wie einen O-Ring 20, aufweisen kann, um das Substrat 40 abgedichtet in bzw. an dem Gehäuse aufnehmen zu können.

Der Gassensor 200 kann beliebige weitere Elemente aufweisen, wie zum Beispiel nicht gezeigte weitere Elektroden, zum Beispiel Referenzelektroden, Gegenelektroden und Messelektroden.

Der Gassensor 200 kann, wie in Fig. 1 gezeigt ist, eine Diffusionsbarriere 70 aufweisen. Diese kann einen Gaseinlass oder einen Gasauslass des Gassensors 200 bilden. In einem nicht gezeigten Beispiel kann der Gassensor 200 ferner eine weitere Diffusionsbarriere aufweisen, welche in Bezug auf die Betrachtungsebene unterhalb des Substrates 40 angeordnet sein kann.

Fig. 2 zeigt ein weiteres Beispiel eines Gassensors 200. Da der Gassensor 200 nach Fig. 2 dem nach Fig. 1 ähnelt, werden lediglich Unterschiede zu den Gassensor 200 nach Fig. 1 beschrieben.

Im Gegensatz zu dem Gassensor 200 nach Fig. 1 wird eine Elektrode 30 des Gassensors 200 nach Fig. 2 nicht direkt durch das aufgebrachte Elektrodenmaterial 50b gebildet, sondern durch eine zusätzliche Schicht, welche auf das Elektrodenmaterial 50b aufgebracht wird. Diese zusätzliche Schicht wird gebildet durch zusätzliches Elektrodenmaterial 52. Die zusätzliche Schicht kann beispielsweise durch einen zusätzlichen Druckschritt erhalten werden oder durch ein beliebiges anderes Verfahren. Von Vorteil ist es, wenn die Elektrode 30 in direktem Kontakt mit dem Elektrodenmaterial 50b steht, sodass die Elektrode 30 mittels der Anzahl elektrisch kontaktierbarer Kontaktflächen 51a, 51b elektrisch kontaktierbar ist.

In dem Ausführungsbeispiel nach Fig. 2 liegt die elektrische Ableitungen 60 als Metalldraht vor, welcher sowohl die Kontaktfläche 51a als auch die Kontaktfläche 51b kontaktiert. Jede andere Form der Ausgestaltung einer elektrischen Ableitung 60 ist jedoch möglich.

In jeder der Ausführungsformen nach Fig. 1 und Fig. 2 kann ein Volumen innerhalb des Gassensors 200 zumindest teilweise mit einem Elektrolyt gefüllt sein.

Es ist in allen beschriebenen Ausführungsbeispielen möglich, dass das Elektrodenmaterial 50a, 50b, 50c und das Substrat 40 durch eine thermische Behandlung des Substrats 40 und das Elektrodenmaterials 50a, 50b, 50c verbunden sind. Ein Beispiel einer solchen thermischen Behandlung ist das Sintern.

Es ist in allen beschriebenen Ausführungsbeispielen möglich, dass das Elektrodenmaterial 50a, 50b, 50c ein Glas und ein Metall und/oder ein Metalloxid und/oder den Kunststoff und/oder Kohlenstoff aufweist. Entsprechendes gilt für das zusätzliche Elektrodenmaterial 52, wenn vorhanden.

Vorzugsweise ist das Metall und/oder das Metalloxid ausgewählt aus der Gruppe umfassend: Platin, Platinoxid, Gold, Goldoxid, Iridium, Iridiumoxid, Silber, Silberoxid, Ruthenium, Rutheniumoxid, Rhodium, Rhodiumoxid, Palladium, Palladiumoxid, Kupfer, Kupferoxid und Nickel.

Vorzugsweise ist der Kunststoff ausgewählt aus der Gruppe umfassend: PTFE, PE, PET, PP, PVC, PEEK, PFA, PVDF, PA, PU und FEP.

Es ist in allen beschriebenen Ausführungsbeispielen möglich, dass das Verfahren ferner den Schritt S5 aufweist: Hydrophilisieren einer Oberfläche der Elektrode 30.

Alle hierin beschriebenen Merkmale sind beliebig miteinander kombinierbar, soweit dies nicht Alternativen betrifft oder widersprüchlich ist.

### Bezugszeichenliste

10a erster Gehäuseteil
10b zweiter Gehäuseteil
20 Dichtelement, O-Ring
30 Elektrode
40 Substrat
41a Durchgangsöffnung
41b Durchgangsöffnung
50a, 50b, 50c Elektrodenmaterial
51a, 51b Kontaktfläche
52 zusätzliches Elektrodenmaterial
60, 60a, 60b elektrische Ableitung
70 Diffusionsbarriere
100 Verfahren
200 Gassensor, elektrochemischer Gassensor
G Grundfläche
N Normalenrichtung
O Oberseite
S1, S2, ... Verfahrensschritte
U Unterseite

## Patentansprüche

1. Verfahren (100) zur Herstellung eines elektrochemischen Gassensors (200), aufweisend die Schritte (S1, S2, ...):
(S1) Bereitstellen eines Substrats (40), wobei das Substrat (40) eine Anzahl von in Normalenrichtung (N) des Substrats (40) gebildeten Durchgangsöffnungen (41a, 41b) aufweist,
(S2) Aufbringen von Elektrodenmaterial (50a, 50b, 50c) auf eine Oberseite (O) des Substrats (40) und/oder auf eine Unterseite (U) des Substrats (40), und
(S3) Verbinden von Elektrodenmaterial (50a, 50b, 50c) und Substrat (40), so dass die Anzahl von Durchgangsöffnungen (41a, 41b) durch das Elektrodenmaterial (50a, 50b, 50c) verschlossen wird, um eine Anzahl von auf der, der Oberseite (O) gegenüberliegenden, Unterseite (U) des Substrats (40) elektrisch kontaktierbaren Kontaktflächen (51a, 51b) zu erhalten.

2. Verfahren (100) nach Anspruch 1,
wobei das Verbinden von Elektrodenmaterial (50a, 50b, 50c) und Substrat (40) eine thermische Behandlung von Substrat (40) und Elektrodenmaterial (50a, 50b, 50c) umfasst.

3. Verfahren (100) nach Anspruch 1 oder 2,
wobei das Substrat (40) als eine gasdurchlässige und flüssigkeitsdichte Membran ausgestaltet ist, oder
wobei das Substrat (40) als ein flüssigkeitsbenetzbarer Separator ausgestaltet ist.

4. Verfahren (100) nach einem der vorherigen Ansprüche,
wobei das Substrat (40) ein Glas oder einen Kunststoff umfasst,
wobei das Elektrodenmaterial (50a, 50b, 50c) das Glas und/oder ein Metall und/oder ein Metalloxid und/oder den Kunststoff und/oder Kohlenstoff aufweist.

5. Verfahren (100) nach Anspruch 4,
wobei das Metall und/oder das Metalloxid ausgewählt ist aus der Gruppe umfassend: Platin, Platinoxid, Gold, Goldoxid, Iridium, Iridiumoxid, Silber, Silberoxid, Ruthenium, Rutheniumoxid, Rhodium, Rhodiumoxid, Palladium, Palladiumoxid, Kupfer, Kupferoxid und Nickel.

6. Verfahren (100) nach Anspruch 4 oder 5,
wobei der Kunststoff ausgewählt ist aus der Gruppe umfassend: PTFE, PE, PET, PP, PVC, PEEK, PFA, PVDF, PA, PU und FEP.

7. Verfahren (100) nach einem der vorherigen Ansprüche, ferner aufweisend den Schritt:
(S4) Bereitstellen einer Elektrode (30) auf dem Substrat (40),
wobei die Elektrode (30) durch das das Aufbringen von dem Elektrodenmaterial (50a, 50b, 50c) auf die Oberseite (O) des Substrats (40) und/oder auf die Unterseite (U) des Substrats (40) erhalten wird, oder
wobei die Elektrode (30) durch ein zusätzliches Aufbringen von zusätzlichem Elektrodenmaterial (52) auf das Elektrodenmaterial (50b) und/oder auf die Oberseite (O) des Substrats (40) und/oder auf die Unterseite (U) des Substrats (40) erhalten wird.

8. Verfahren (100) nach einem der vorherigen Ansprüche, ferner aufweisend den Schritt:
(S5) Hydrophilisieren einer Oberfläche der Elektrode (30).

9. Elektrochemischer Gassensor (200), erhältlich durch das Verfahren (100) nach einem der Ansprüche 1 bis 8.

10. Elektrochemischer Gassensor (200) nach Anspruch 9, ferner aufweisend:
- ein Sensorgehäuse (10a, 10b),
- optional eine Diffusionsbarriere (70), welche einen Gasdurchtritt von einer Umgebung zum Substrat (40) behindert,
- optional ein Dichtelement (20), welches zwischen dem Substrat (40) und dem Sensorgehäuse (10b) angeordnet ist,
- eine Anzahl elektrischer Ableitungen (60a, 60b), welche in elektrischer Verbindung mit der Anzahl elektrisch kontaktierbarer Kontaktflächen (51a, 51b) stehen.
